# EUROPÄISCHE PATENTANMELDUNG

(11) **EP 2 221 427 A2**
(43) Veröffentlichungstag der Anmeldung: **25.08.2010**
(21) Anmeldenummer: 10153966.6
(22) Anmeldetag: 18.02.2010
(51) Int. Cl.: E04C 2/26

(54) **Montagevorrichtung und Verfahren zum Zusammenbau von Wandelementen im Holzrahmen- oder Ständerhausbau**

(30) Priorität: 20.02.2009 DE 202009002437 U
(71) Anmelder: Hundegger, Hans, D-87749 Hawangen (DE)
(72) Erfinder: Hundegger, Hans, D-87749 Hawangen (DE)
(74) Vertreter: Charrier, Rapp & Liebau

(57) **Zusammenfassung**

Die Erfindung betrifft eine Montagevorrichtung und ein Verfahren zum Zusammenbau von Wandelementen im Holzrahmen- oder Ständerhausbau. Die Montagevorrichtung enthält eine gitterförmige Montagewand (1), die mit einer geringen Neigung gegenüber der Vertikalen angeordnet ist, und ein gleichzeitiges Arbeiten auf beiden Seiten des Wandelements ermöglicht.

## Beschreibung

Die Erfindung betrifft eine Montagevorrichtung und ein Verfahren zum Zusammenbau von Wandelementen im Holzrahmen- oder Ständerhausbau.

Bisher werden die im Holzrahmen- oder Ständerhausbau benötigten Wandelemente horizontal liegend zusammengebaut und vernagelt. Auf diese Weise kann jedoch immer nur eine Wandseite bearbeitet werden. Um die andere Seite zu beplanken und zu bearbeiten, muss das Wandelement gewendet werden. Dies ist jedoch mühsam, ergonomisch ungünstig und mit einem erheblichen Zeitaufwand verbunden. Außerdem ist zur Montage der horizontal angeordneten Wandelemente ein erheblicher Platzbedarf erforderlich.

Aufgabe der Erfindung ist es, eine Montagevorrichtung und ein Verfahren der eingangs genannten Art zu schaffen, die bei geringerem Platzbedarf eine schnelle und mühelose Montage ermöglichen.

Diese Aufgabe wird durch eine Montagevorrichtung mit den Merkmalen des Anspruch 1 und durch ein Verfahren mit den Merkmalen des Anspruchs 14 gelöst. Zweckmäßige Ausgestaltungen und Weiterbildungen der Erfindung sind Gegenstand der Unteransprüche.

Die erfindungsgemäße Montagevorrichtung zeichnet sich durch eine gitterförmige Montagewand aus, die mit einer geringen Neigung gegenüber der Vertikalen angeordnet ist. An dieser Montagewand können die Teile der zu fertigenden Wandelemente angelegt und zur Bearbeitung zusammengestellt werden. Durch die geringe Neigung der Montagewand werden die daran angelegten Wandelemente auch ohne aufwändige Halteelemente gehalten. Die gitterförmige Montagewand ermöglicht eine aufrechte Montage, wobei im Vergleich zur herkömmlichen horizontalen Montage ein erheblich geringerer Platzbedarf besteht. Die Montagewand ermöglicht ein gleichzeitiges Arbeiten auf beiden Seiten des Wandelements, wodurch eine schnellere und effektivere Montage auch ohne Wenden des Wandelements erreichbar ist. Durch die aufrechte Stellung der Wandelemente während der Montage ist außerdem ein ergonomisch besseres Arbeiten möglich.

In einer besonders zweckmäßigen Ausführung sind an der Montagewand über Führungselemente verschiebbare Werkzeuge angebracht. Die Werkzeuge sind somit ohne weiteres erreichbar und können zur jeweiligen Bearbeitungsstelle verschoben werden.

In einer weiteren zweckmäßigen Ausführung sind an der Montagewand Hubeinrichtungen angeordnet. Dadurch können Balken oder andere Bauteile angehoben und in die für die Montage zweckmäßige Lage gebracht werden.

Eine weitere vorteilhafte Ausführung zeichnet sich dadurch aus, dass an der Montagewand über Führungsschienen verschiebbare Treppenwagen angeordnet sind. Dadurch sind die Wandelemente auf der gesamten Fläche gut erreichbar.

Die Werkzeuge und Treppenwagen sind zweckmäßigerweise auf der Vorder- und Rückseite der Montagewand angebracht, so dass das Wandelement von beiden Seiten der Montagewand bearbeitet werden kann.

Bei dem erfindungsgemäßen Verfahren werden zunächst fertig zugeschnittene Platten in die aufrecht angeordnete Montagewand eingelegt. Anschließende wird eine Schwelle auf ein Auflageelement an der Unterseite der Montagewand aufgelegt. Ein auf die Schwelle aufgelegter Rähmbalken kann dann mittels einer an der Montagewand angeordneten Hebeeinrichtung angehoben werden. In den angehobenen Rähmbalken können dann Ständer eingehängt werden. Anschließend kann der Rähmbalken wieder leicht abgelassen werden, um die unteren Enden der Ständer mit der Schwelle zu verbinden. Daraufhin können die Platten und Ständer von der Rückseite der Montagewand her vernagelt werden. Dann können Deckplatten in die Montagewand eingelegt und diese mit den Ständern von der Vorderseite der Monatgewand vernagelt werden. Vor der Montage der Deckplatten können ggf. noch Dämmplatten oder andere Dämmstoffe zwischen die Ständer eingelegt werden.

Weitere Besonderheiten und Vorteile der Erfindung ergeben sich aus der folgenden Beschreibung eines bevorzugten Ausführungsbeispiels anhand der Zeichnung. Es zeigen:
- **Figur 1:**: eine erfindungsgemäße Montagevorrichtung in einer Perspektive;
- **Figur 2:**: die Montagevorrichtung mit Teilen eines zu fertigenden Wandelements;
- **Figur 3:**: die Montagevorrichtung mit einem Wandelement beim Einbau von Dämmplatten;
- **Figur 4:**: eine Detailansicht einer Verbindung zwischen einer Schwelle und einem Ständer und
- **Figuren 5 bis 8:**: verschiedene Ausführungsbeispiele für Auflageelemente.

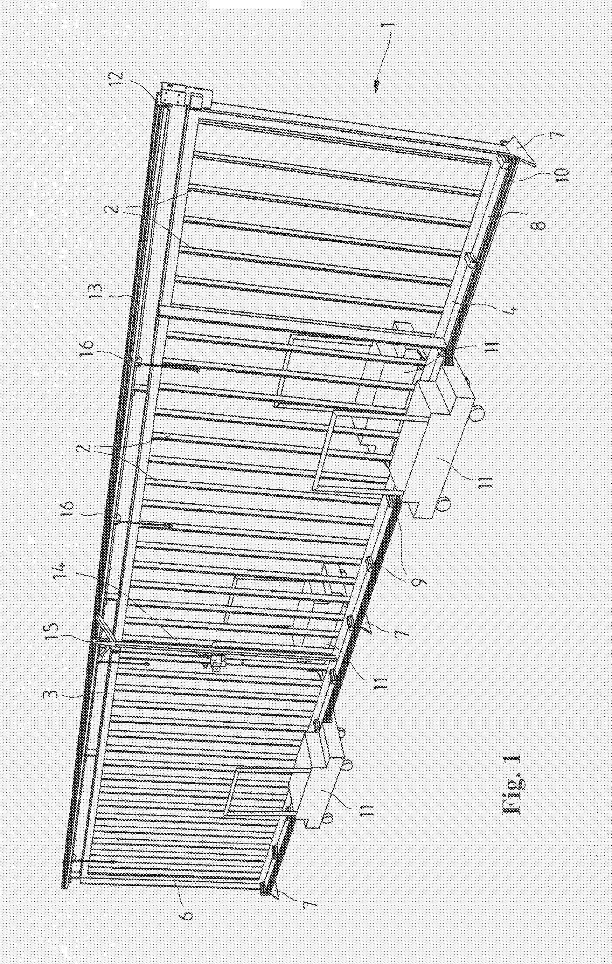

Die in den Figuren 1 gezeigte Montagevorrichtung enthält eine vorzugsweise als Stahlbaukonstruktion ausgeführte gitterförmige Montagewand 1, die mit einer geringen Neigung von z.B. 5° gegenüber der Vertikalen auf dem Boden einer Montagehalle oder dgl. aufgestellt ist. Die Montagewand 1 weist mehrere voneinander beabstandete, parallele Gitterstäbe 2 und einen rechteckigen Rahmen aus einem oberen und unteren waagrechten Träger 3 bzw. 4 und seitlichen Stützen 5 und 6 auf. Über entsprechend geformte Füße 7 steht die gitterförmige Montagewand 1 mit der gewünschten geringen Neigung zur Vertikalen auf dem Boden auf. Der Abstand der an dem oberen und unteren Träger 3 und 4 befestigten Gitterstäbe 2 ist an das Rastermaß von Riegeln bzw. Ständern einer zu fertigenden Holzrahmen- oder Ständerkonstruktion angepasst. Wenn z.B. das Rastermaß der Riegel/Ständer einen bestimmten Wert aufweist, sollte der Abstand der Gitterstäbe diesem Wert entsprechen oder einen ganzzahligen Teil bzw. ein ganzzahliges Vielfaches dieses Wertes betragen. Die Gitterstäbe 2 können auch verstellbar sein, so dass der Abstand zwischen den Gitterstäben 2 bei Bedarf verändert und an die jeweiligen Anforderungen angepasst werden kann.

Wie aus Figur 1 hervorgeht, weist die Montagewand 1 an dem unteren Träger 4 ein nach vorne vorstehendes Auflageteil 8 mit mehreren voneinander beabstandeten Auflageelementen 9 auf. An dem unteren Träger 4 sind ferner untere Führungsschienen 10 für an der Vorderseite und Rückseite der Montagewand 1 in deren Längsrichtung verfahrbare Treppenwagen 11 montiert.

An der Oberseite der Montagewand 1 sind auf einem Längsträger 12 außerdem obere Führungsschienen 13 montiert. In den oberen Führungsschienen 13 sind an Balancern aufgehängte Nagelgeräte oder andere Werkzeuge 14 horizontal verschiebbar geführt. Die Werkzeuge 14 sind über eine Führungseinrichtung 15 außerdem in der Höhe verstellbar geführt, so dass diese ohne Kraftaufwand horizontal und vertikal bewegt werden können. Auch hier sind sowohl auf der Vorder- als auch auf der Rückseite der Montagewand entsprechende Nagelgeräte als Werkzeuge 14 vorgesehen. An dem oberen Längsträger 12 sind außerdem als Seil-, Ketten- oder Gurtaufzüge ausgeführte Hebeeinrichtungen 16 montiert.

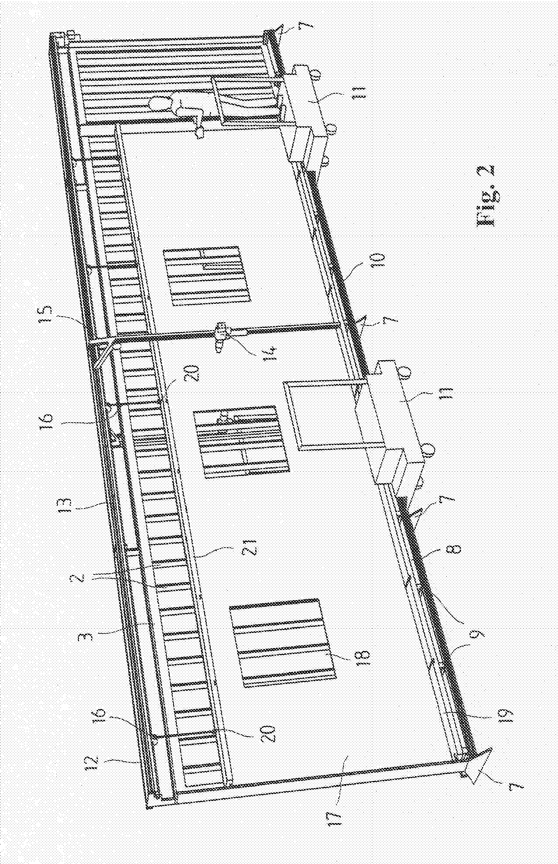

Bei der Montage von Wandelementen mit Hilfe der vorstehend beschriebenen Montagevorrichtung werden gemäß Figur 2 an der nach hinten leicht geneigten Vorderseite der Montagewand 1 zunächst fertig zugeschnittene Platten 17 eingelegt. Diese Platten 17 können z.B. bereits mit Tür- oder Fensterausschnitten 18 versehen sein. Anschließend wird auf die an der Unterseite der Montagewand 1 angeordneten Auflageelemente 9 am Auflageteil 8 eine in Figur 2 dargestellte Schwelle 19 aufgelegt. Auf die Schwelle 19 kann dann ein so genannter Rähmbalken 21 aufgelegt werden. Dieser wird dann mit den integrierten Hebeeinrichtungen 16 über später auch zum Transport der Wandelemente verwendete Anhängeösen 20 hochgezogen, wie dies aus Figur 2 hervorgeht.

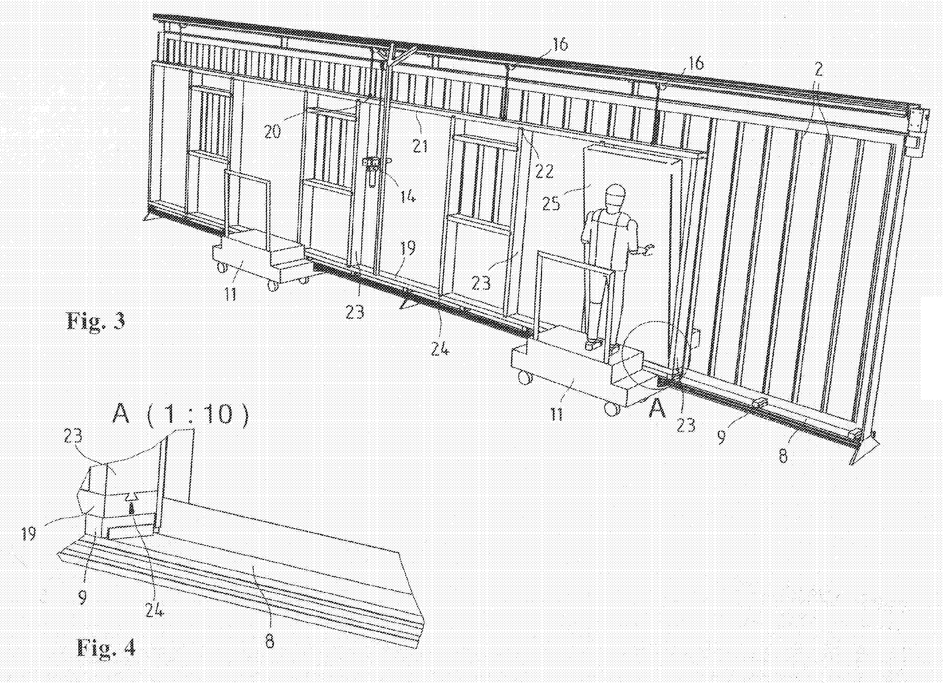

Anschließend werden in den Rähmbalken 21 über obere Schwalbenschwanz-Verbindungen 22 oder andere entsprechende Verbindungen in Figur 3 erkennbare Ständer 23 eingehängt. Der Rähmbalken 21 wird dann soweit abgelassen, bis in Figur 4 vergrößert dargestellte untere Schwalbenschwanz-Verbindungen 24 zwischen der Schwelle 19 und den Ständern 23 zusammenpassen und zusammengefügt werden können. Dann werden die Platten 17 und die Ständer 23 von der Rückseite der Montagewand 1 mit Hilfe der hinteren Nagelgeräte 14 vernagelt.

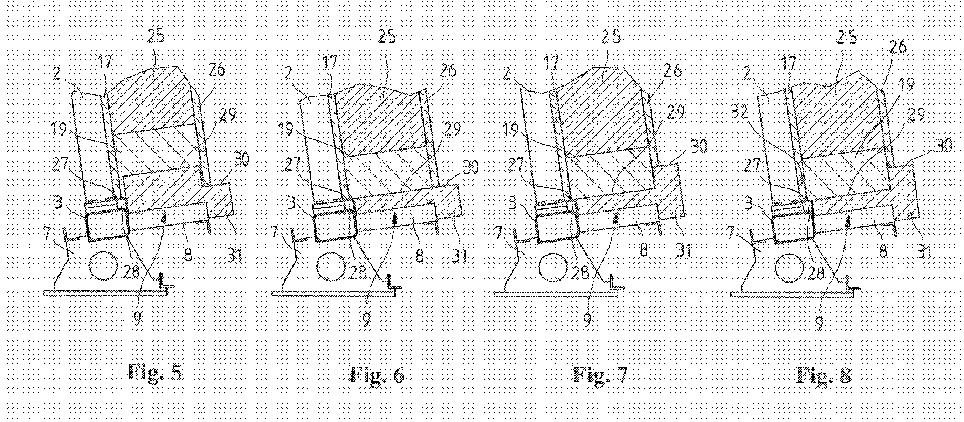

Von der Vorderseite der Montagewand 1 können daraufhin Dämmplatten 25 oder andere Dämm- bzw. Füllelemente zwischen die Ständer 23 eingelegt werden, wie dies in Figur 3 dargestellt ist. Von einer an der Montagewand 1 angeordneten Rolle können dann Folien abgezogen und an die Ständer 23 getackert werden. Anschließend können dann weitere in den Figuren 5 bis 8 dargestellte Deckplatten 26 in die Montagewand 1 zur Anlage an die Ständer 23 eingelegt und zum Verschließen des Wandelements mit Hilfe der vorderen Nagelgeräte an die Ständer 23 von der Vorderseite der Monatgewand 1 angenagelt werden. Abschließend kann eine Außenverkleidung montiert oder das fertige Wandelement mit Hilfe eines Hallenkrans aus der Montagevorrichtung 1 gehoben werden.

In den Figuren 5 bis 8 sind verschiedene Ausführungsbeispiele für Auflageelemente 9 gezeigt. Die innere Platte 17 liegt auf einer oberen Auflagefläche 27 eines Trägers 28 an der Innenseite des nach vorne vorstehenden Auflageteils 8 auf. Die Auflageelemente 9 können auf das nach vorne vorstehende Auflageteil 8 aufgelegt werden und weisen obere Auflageflächen 29 und 30 für die Auflage der Schwelle 19 und der Deckplatte 26 auf. Die Auflageteile 9 enthalten außerdem einen gegenüber dem Auflageteil 8 vorstehenden, nach unten ragenden Ansatz 31. Das Auflageteil 8 kann einen U-förmigen Querschnitt aufweisen. Bei dem in Figur 5 gezeigten Auflageelement 9 ist die Auflagefläche 30 für die Deckplatte 26 in der Höhe der oberen Auflagefläche 27 des Trägers 28 angeordnet und die Auflagefläche 29 für die Schwelle 19 ist gegenüber der Auflagefläche 30 erhöht. Dadurch ist bei dem fertigen Wandelement die Schwelle 19 gegenüber der Platte 17 und der Deckplatte 26 nach innen zurückversetzt.

Bei dem in Figur 6 gezeigten Auflageelement 9 sind die oberen Auflageflächen 29 und 30 für die Schwelle 19 und die Deckplatte 26 auf derselben Höhe wie die Auflagefläche 27 für die innere Platte 17 angeordnet, so dass bei dem fertigen Wandelement die Schwelle 19 an der Unterseite mit den Unterseiten der Platte 17 und Deckplatte 26 bündig abschließt.

Bei dem in Figur 7 dargestellten Auflageelement 9 liegt die obere Anlagefläche 29 für die Schwelle 19 in der Höhe der Auflagefläche 27 der inneren Platte 17, während die Auflagefläche 30 für die Deckplatte 26 nach oben versetzt ist. Dadurch ist die vordere Deckplatte 26 beim fertig gestellten Wandelement gegenüber der Schwelle 19 nach oben versetzt.

Wenn beim fertigen Wandelement sowohl die innere Platte 17 als auch die Deckplatte 26 gegenüber der Schwelle 19 nach oben versetzt sein sollen, kann auf die Auflagefläche 27 am Träger 28 eine Leiste 32 in der gewünschten Höhe aufgelegt werden, wie dies in Figur 8 gezeigt ist.

## Patentansprüche

1. Montagevorrichtung zum Zusammenbau von Wandelementen im Holzrahmen- oder Ständerhausbau, **gekennzeichnet durch** eine gitterförmige Montagewand (1), die mit einer geringen Neigung gegenüber der Vertikalen angeordnet ist.

2. Montagevorrichtung nach Anspruch 1, **dadurch gekennzeichnet, dass** an der Montagewand (1) über Führungselemente (13, 15) verschiebbare Werkzeuge (14) angeordnet sind.

3. Montagevorrichtung nach Anspruch 1 oder 2, **dadurch gekennzeichnet, dass** an der Montagewand (1) Hebeinrichtungen (16) angeordnet sind.

4. Montagevorrichtung nach einem der Ansprüche 1 bis 3, **dadurch gekennzeichnet, dass** an der Montagewand (1) über Führungsschienen (10) verschiebbare Treppenwagen (11) angeordnet sind.

5. Montagevorrichtung nach einem der Ansprüche 1 bis 4, **dadurch gekennzeichnet, dass** die Montagewand (1) mehrere voneinander beabstandete parallele Gitterstäbe (2) und einen rechteckigen Rahmen aus einem oberen und unteren waagrechten Träger (3, 4) und seitlichen Stützen (5, 6) aufweist.

6. Montagevorrichtung nach Anspruch 5, dass der Abstand der Gitterstäbe (2) veränderbar ist.

7. Montagevorrichtung nach einem der Ansprüche 1 bis 6, **dadurch gekennzeichnet, dass** die Montagewand (1) über entsprechend geformte Füße (7) mit der geringen Neigung zur Vertikalen auf dem Boden aufsteht.

8. Montagevorrichtung nach einem der Ansprüche 1 bis 7, **dadurch gekennzeichnet, dass** die Montagewand (1) an der Unterseite ein nach vorne vorstehendes Auflageteil (8) mit mehreren voneinander beabstandeten Auflageelementen (9) enthält.

9. Montagevorrichtung nach einem der Ansprüche 2 bis 8, **dadurch gekennzeichnet, dass** die Werkzeuge (14) an der Vorder- und Rückseite der Montagewand (1) angeordnet sind.

10. Montagevorrichtung nach einem der Ansprüche 4 bis 9, **dadurch gekennzeichnet, dass** die Treppenwagen (11) an der Vorder- und Rückseite der Montagewand (1) angeordnet sind.

11. Montagevorrichtung nach einem der Ansprüche 1 bis 10, **dadurch gekennzeichnet, dass** an der Montagewand (1) eine Rolle für Abdeckfolie angebracht ist.

12. Montagevorrichtung nach einem der Ansprüche 8 bis 11, **dadurch gekennzeichnet, dass** die Auflageelemente (9) eine Auflagefläche (29) für eine Schwelle (19) und eine Auflagefläche (30) für eine Deckplatte (26) aufweisen.

13. Montagevorrichtung nach Anspruch 12, **dadurch gekennzeichnet, dass** die Auflagefläche (29) für die Schwelle (19) gegenüber der Auflagefläche (30) für die Deckplatte (26) in der Höhe versetzt ist.

14. Verfahren zum Zusammenbau von Wandelementen im Holzrahmen- oder Ständerhausbau mit folgenden Schritten:
a) Einlegen von fertig zugeschnittenen Platten (17) in eine gitterförmige, aufrechte Montagewand (1);
b) Auflegen einer Schwelle (19) auf ein Auflageelement (9) an der Unterseite der Montagewand (1)
c) Auflegen eines Rähmbalkens (21) auf die Schwelle (19);
d) Anheben des Rähmbalkens (21) mittels einer an der Montagewand (1) angeordneten Hebeeinrichtung (16);
e) Einhängen von Ständern (23) in den angehobenen Rähmbalken (21);
f) Ablassen des Rähmbalkens (21) zur Verbindung der unteren Enden der Ständer (23) mit der Schwelle (19);
g) Vernageln der Platten (17) und Ständer (23) von der Rückseite der Montagewand (1);
h) Einlegen von Deckplatten (26) in die Montagewand und
i) Vernageln der Deckplatten (26) mit den Ständern (23) von der Vorderseite der Montagewand (1).

15. Verfahren nach Anspruch 14, **dadurch gekennzeichnet, dass** vor dem Einlegen der Deckplatten (26) in die Montagewand (1) Dämmelemente (25) oder andere Dämm- und Füllelemente zwischen die Ständer (23) eingelegt werden.

16. Verfahren nach Anspruch 14 oder 15, **dadurch gekennzeichnet, dass** vor dem Einlegen der Deckplatten (26) Folien von einer an der Montagewand angeordneten Rolle abgezogen und an die Ständer (23) angetackert werden.
